# EUROPEAN PATENT APPLICATION

(11) **EP 4 851 623 A1**
(43) Date of publication of application: **09.12.2026**
(21) Application number: 26182304.1
(22) Date of filing: 01.06.2026
(51) Int. Cl.: G01N 30/86

(54) **METHOD OF SEARCHING FOR ANALYSIS CONDITION, ANALYSIS SYSTEM, AND PROGRAM**

(30) Priority: 02.06.2025 US 202563816316 P
(71) Applicant: SHIMADZU CORPORATION, Kyoto-shi, Kyoto 604-8511 (JP); Albert Einstein College of Medicine, Bronx, NY 10461 (US)
(72) Inventor: FUJITA, Yuichiro, Kyoto, 604-8511 (JP); NODA, Akira, Kyoto, 604-8511 (JP); WATANABE, Kyoko, Columbia, 21046 (US); KITAMURA, Seiya, Bronx, NY, 10461 (US); NAKANE, Keita, Bronx, NY, 10461 (US)
(74) Representative: Müller-Boré & Partner Patentanwälte PartG mbB

(57) **Abstract**

An analysis condition search method according to the present disclosure is a method of searching for an analysis condition for acquiring a chromatogram with a desired resolution by analyzing a sample using a first column, the sample including a first component and a second component different from each other. The analysis condition search method includes: acquiring a first chromatogram by analyzing the sample under an analysis condition under which a second column is used, the second column being shorter than the first column; estimating, from the first chromatogram, an estimated resolution between peaks of the first component and the second component when the second column is changed to the first column; and comparing the estimated resolution with the desired resolution.

## Description

### CROSS REFERENCE TO RELATED APPLICATIONS

This non-provisional application is based on U.S. Provisional Patent Application No. 63/816,316 filed on June 2, 2025 with the U.S. Patent and Trademark Office, the entire contents of which are hereby incorporated by reference.

### BACKGROUND OF THE INVENTION

### Field of the Invention

The present disclosure relates to a method of searching for an analysis condition, an analysis system, and a program, and more particularly relates to reduction of time required to search for a condition of an analysis that uses a chromatograph.

### Description of the Background Art

The concentrations and contents of components in a sample can be calculated from the areas and heights of peaks on a chromatogram obtained by analyzing the sample by a chromatograph. In this case, in order to precisely calculate the areas and heights of the peaks, it is preferable that a desired overlap between the peaks on the chromatogram is smaller (resolution is larger).

When it is necessary to acquire a chromatogram with a desired resolution by using a specific column to analyze a sample including a first component and a second component different from each other, a desired analysis condition is specified by actually repeating actual measurement using the specific column while changing analysis conditions other than the column. The actual measurement requires an analysis time corresponding to the length of the column (see Szabolcs Fekete et. al, 'Studying effective column lengths in liquid chromatography of large biomolecules', Journal of Chromatography A, Volume 1692 (2023).), and it has been required to reduce the time required to specify the desired analysis condition.

### SUMMARY OF INVENTION

The present disclosure has been made in view of such a circumstance, and has an object to reduce time required to search for a condition of an analysis for a sample using a chromatograph.

An analysis condition search method according to one implementation of the present disclosure is a method of searching for an analysis condition for acquiring a chromatogram with a desired resolution by analyzing a sample using a first column, the sample including a first component and a second component different from each other, the method including: acquiring a first chromatogram by analyzing the sample under an analysis condition under which a second column is used, the second column being shorter than the first column; estimating, from the first chromatogram, an estimated resolution between peaks of the first component and the second component when the second column is changed to the first column; and comparing the estimated resolution with the desired resolution.

An analysis system according to another implementation of the present disclosure is an analysis system for searching for an analysis condition for acquiring a chromatogram with a desired resolution by analyzing a sample using a first column, the sample including a first component and a second component different from each other, the analysis system including: a chromatograph; and a controller that controls an operation of the chromatograph, wherein the controller is configured to acquire a first chromatogram obtained by analyzing the sample using the chromatograph under an analysis condition under which a second column shorter than the first column is used, estimate, from the first chromatogram, an estimated resolution between peaks of the first component and the second component when the second column is changed to the first column, and compare the estimated resolution with the desired resolution.

An analysis condition search method according to another implementation of the present disclosure is a method of searching for an analysis condition for acquiring a chromatogram with a desired resolution by analyzing a sample using a first column, the sample including a first component and a second component different from each other, the method including: acquiring one or more chromatograms obtained by analyzing the sample using a second column shorter than the first column and in accordance with one or more analysis conditions; estimating an estimated resolution between peaks of the first component and the second component on each of the one or more chromatograms when the second column is changed to the first column; and comparing the estimated resolution with the desired resolution.

A program having an instruction that, when executed by one or more processors of a computer, causes the computer to perform the analysis condition search method described above.

An analysis system according to another implementation of the present disclosure is an analysis system for searching for an analysis condition for acquiring a chromatogram with a desired resolution by analyzing a sample using a first column, the sample including a first component and a second component different from each other, the analysis system including: a chromatograph; and a controller that controls an operation of the chromatograph, wherein the controller is configured to acquire one or more chromatograms obtained by analyzing, by the chromatograph, the sample using a second column shorter than the first column and in accordance with one or more analysis conditions, estimate an estimated resolution between peaks of the first component and the second component on each of the one or more chromatograms when the second column is changed to the first column, and compare the estimated resolution with the desired resolution.

The foregoing and other objects, features, aspects, and advantages of this invention will become more apparent from the following detailed description of this invention when taken in conjunction with the accompanying drawings.

### BRIEF DESCRIPTION OF DRAWINGS

Fig. 1 is a schematic diagram of an analysis system according to an embodiment.
Fig. 2 is a diagram for illustrating an analysis condition search method according to the embodiment.
Fig. 3 is a flowchart showing analysis condition search processing according to the embodiment.
Fig. 4 is a flowchart showing analysis condition search processing according to a modification.
Fig. 5 is a diagram for illustrating an analysis condition.
Fig. 6 is a diagram for illustrating a width of an overlapped peak.

### DESCRIPTION OF THE PREFERRED EMBODIMENTS

Hereinafter, an embodiment of the present disclosure will be described in detail with reference to figures. In the figures, the same or corresponding portions are denoted by the same reference characters, and will not be described repeatedly. Hereinafter, a liquid chromatograph will be exemplified as a chromatograph, but a condition search method in the present disclosure is not limited to the liquid chromatograph, and can also be used for a gas chromatograph and a supercritical fluid chromatograph. Moreover, the condition search method according to the present disclosure can also be used for a chromatograph including a mass spectrometer. Therefore, for example, the condition search method according to the present disclosure can also be used for a liquid chromatograph mass spectrometer, a gas chromatograph mass spectrometer, and a supercritical fluid chromatograph mass spectrometer.

### [Overall Configuration of Analysis System]

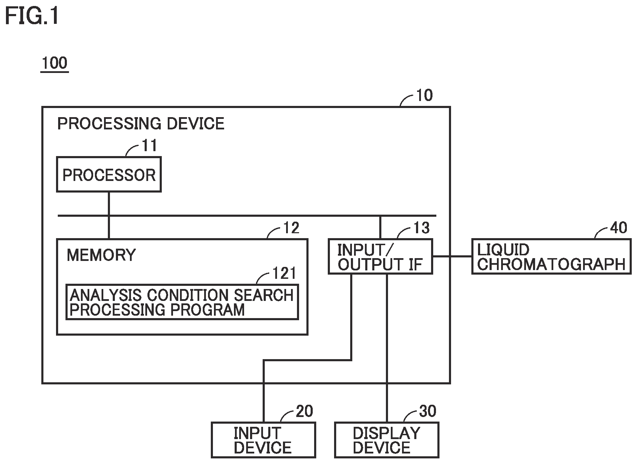

Fig. 1 is a block diagram showing a configuration of an analysis system 100 according to the embodiment. Referring to Fig. 1, analysis system 100 includes a processing device 10, an input device 20, a display device 30, and a liquid chromatograph 40. Processing device 10 may be incorporated into liquid chromatograph 40.

Analysis system 100 can measure an amount of each component included in a sample. Moreover, by using a first column having a first column length so as to analyze a sample including a first component and a second component different from each other, analysis system 100 searches, using a second column shorter than the first column, for an analysis condition for acquiring a chromatogram with a desired resolution. The desired resolution is, for example, a resolution between the first component and the second component on the chromatogram to be obtained as desired by a user when analyzing the sample. The desired resolution is, for example, 1.0 or more, and more preferably 1.5 or more. Specific processing performed by analysis system 100 will be described in detail later. It should be noted that the second column is different from the first column only in column length and the other features of the columns are the same. Examples of the other features of the columns include a functional group of a filler, a particle size, and a column inner diameter.

The analysis condition is a condition for operating a device and includes one or more parameters. The parameters are, for example, an elution method, a flow rate, and a temperature of a column oven. The elution method includes a gradient mode and an isocratic mode. The gradient mode is an elution method in which two or more solvents are mixed and used as a mobile phase. In the gradient mode, a mixing ratio of the two or more solvents is changed with passage of time in accordance with a gradient condition. Thus, as the parameters, the gradient mode further has types of the two or more solvents, pHs of the two or more solvents, organic solvent ratios of the two or more solvent, and the gradient condition. The isocratic mode is an elution method that uses a single solvent as the mobile phase. Thus, the isocratic mode further has, as the parameters, a type of the solvent, a pH of the solvent, and an organic solvent ratio of the solvent.

Processing device 10 includes a processor 11, a memory 12, and an input/output interface (I/F) 13. These units are connected to one another via a bus so as to communicate with one another.

Processor 11 is an exemplary electric circuit, and controls an operation of processing device 10 by executing a given program. The program to be executed by processor 11 may be stored in memory 12, or may be stored in a storage device (not shown) outside processing device 10. Processor 11 is, for example, a CPU (Central Processing Unit).

Memory 12 can store, in a non-transient manner, a program to be executed by processor 11, and a chromatogram generated by liquid chromatograph 40. The program stored in memory 12 includes an analysis condition search processing program 121. Memory 12 includes a volatile memory (for example, a RAM (Random Access Memory)) and a non-volatile memory (for example, a ROM (Read Only Memory), a hard disk drive, and a solid state drive). It should be noted that the above-described program may be stored in an external storage device accessible by processor 11.

Input/output I/F 13 is an interface for exchanging various data between processor 11 and a device connected to input/output I/F 13. Input device 20, display device 30, and liquid chromatograph 40 are connected to input/output I/F 13. Input/output I/F 13 is realized by, for example, a terminal block, a connector, and a network adapter. Receiving and sending of data via input/output I/F 13 may be performed via wireless communication such as Bluetooth (registered trademark) or wireless LAN, or may be performed via wired communication using USB (Universal Serial Bus) or the like. Processing device 10 can receive a chromatogram acquired by a device other than liquid chromatograph 40 via input/output I/F 13, and can perform data processing onto the chromatogram. It can be said that processing device 10 is a controller that controls the operation of liquid chromatograph 40.

Input device 20 receives input of information from the user to processing device 10. The information is, for example, an analysis condition, the name of a sample, the type of the sample, and the name of a component included in the sample. Input device 20 is constituted of, for example, a touch panel, a mouse, and a keyboard. The analysis condition may be input by the user using input device 20, or may be automatically generated by inputting the upper limit value, lower limit value, and step width of each parameter of the analysis condition.

Display device 30 displays information in accordance with an instruction of processing device 10. The information is, for example, a chromatogram obtained by analyzing the sample, an estimated resolution estimated from the chromatogram, and a chromatogram expected to be generated when another column is used. Display device 30 is constituted of, for example, a liquid crystal display that can display an image. Liquid chromatograph 40 separates the components included in the sample so as to generate the chromatogram. The generated chromatogram is transmitted to processing device 10.

### [Overlap of Peaks on Chromatogram]

The chromatograph can be used to calculate the amounts of the components included in the sample. In this case, it is preferable that there is a small overlap between peaks on the chromatogram obtained by analyzing the sample by the chromatograph. Therefore, it is required to search for an analysis condition under which the peaks are not overlapped with each other on the chromatogram. However, when a plurality of components are included in the sample, it may be difficult to separate all the components from each other. In particular, when two or more components having similar physicochemical properties are included in the sample, it is difficult to separate peaks originated from the components on the chromatogram. In such a case, a peak (hereinafter, referred to as "overlapped peak") in which the plurality of peaks are overlapped with each other may appear on the chromatogram.

Whether or not the two peaks are overlapped with each other is determined by, for example, a resolution. The resolution is an index indicating a degree of separation of a certain peak from an adjacent peak. A resolution R is expressed by the following formula (1), where T_{X} and T_{Y} (T_{X}≤T_{Y}) represent respective retention times of the adjacent peaks and W_{X} and W_{Y} represent respective peak widths of the adjacent peaks.
[Math. 1] $R = \frac{{T}_{Y} - {T}_{X}}{\frac{1}{2} \left({W}_{X}+{W}_{Y}\right)}$ (1)

The separation of the adjacent peaks means that the resolution is 1.5 or more, for example. It should be noted that it is merely an example to define that the adjacent peaks are separated from each other when the resolution is 1.5 or more, and it may be defined that the adjacent peaks are separated from each other when the resolution is another value (for example, 1.8 and 2) or more.

### [Length of Column and Resolution]

In general, as the length of a column used for an analysis is longer, a distance between adjacent peaks on a chromatogram is longer. That is, as the length of the column used for the analysis is longer, a resolution between the adjacent peaks is larger. Therefore, two or more components having peaks overlapped with each other on a chromatogram in an analysis using a certain column may be able to be separated from each other by performing an analysis using a longer column.

By using a resolution between peaks of two components on a chromatogram obtained by performing an analysis using a column X, it is possible to theoretically estimate a resolution between peaks of two components on a chromatogram obtained by performing an analysis using a column Y having the same column features (for example, a functional group of a filler, a particle size, and a column inner diameter) as those of column X except for the column length. A resolution R_{Y} when the analysis is performed using column Y is represented by the following formula (2) using a resolution R_{X} when the analysis is performed using column X, column length L_{X} of column X, and column length L_{Y} of column Y.
[Math. 2] ${R}_{Y} = {R}_{X} \sqrt{\frac{{L}_{Y}}{{L}_{X}}}$ (2)

As shown in the formula (2), when estimating resolution R_{Y}, the value of resolution R_{X} when the analysis is performed using column X is required. Resolution R_{X} is calculated from retention time and peak width of each peak on the chromatogram obtained by performing the analysis using column X and in accordance with the formula (1).

### [Comparative Example]

A method development of the chromatograph is to determine an analysis condition for separating a target component in a sample. In the method development, for example, an analysis condition suitable for separation of the target component is determined based on chromatograms obtained by analyzing the sample in accordance with a plurality of analysis conditions.

As a column used for the analysis is longer, a length between the peaks of the components on a chromatogram are longer. For example, when a component having a physicochemical property similar to that of the target component is included in the sample, a relatively long column (for example, a column of 250 mm) is used to search for an analysis condition to separate the components.

However, since an analysis time becomes longer as the column is longer, time required to search for the analysis condition by using the relatively long column becomes longer than time required to search for the analysis condition by using a relatively short column (for example, a column of 50 mm). On the other hand, when the relatively short column is used to search for the analysis condition, the components may be unable to be separated from each other. For example, when the peaks of the two components are overlapped with each other on the obtained chromatogram, it is difficult to precisely calculate the retention time and peak area of each of the peaks of the components.

### [Analysis Condition Search Method in Embodiment]

To address this, in searching for the analysis condition using the relatively long column, an analysis condition search method according to the embodiment uses the short column having the same column features (for example, a functional group of a filler, a particle size, and a column inner diameter) as those of the relatively long column except for the column length. Specifically, for an overlapped peak in which the peaks originated from the two or more components on the chromatogram obtained using the short column are overlapped with each other, the peaks of the components from which the overlapped peak is originated are estimated. Then, estimated peak retention time and peak width are then used to calculate an estimated resolution between those components on the chromatogram obtained by the analysis using the long column. Then, the estimated resolution obtained by the calculation is compared with the desired resolution desired by the user as the resolution between those components on the chromatogram obtained by the analysis using the relatively long column. When the estimated resolution is equal to or more than the desired resolution as a result of the comparison, the analysis condition is determined as the analysis condition for the analysis using the relatively long column. Moreover, for example, an analysis condition under which the estimated resolution is the largest may be selected from analysis conditions under each of which the resolution is equal to or more than the desired resolution. The user can separate and measure the target component in the sample by analyzing the sample using the relatively long column and in accordance with the selected analysis condition.

Here, the "relatively long column" is an example of the "first column", and the "short column" is an example of the "second column".

Hereinafter, the analysis condition search method according to the embodiment will be described. The following illustratively describes that the analysis condition for the analysis using the first column having the column length of 250 mm is searched for by using the second column having the column length of 50 mm. The sample includes a component A to be quantified and a component B that is an enantiomer thereof. The first column is a column used to quantify the target component included in the sample, and the second column is a column used to search for the analysis condition.

### <1. Reception of Column Length and Desired Resolution>

Processing device 10 receives the column length of the first column, the column length of the second column, and a desired resolution from the user. The desired resolution is a resolution between component A and component B on a desired chromatogram to be obtained as desired by the user by using the first column to analyze the sample including component A and component B.

### <2. Reception of Analysis Condition>

Processing device 10 receives one or more analysis conditions from the user via input device 20. Each of the analysis conditions includes one or more parameters, and the one or more parameters are set to be different from each other.

### <3. Generation of Chromatogram>

Processing device 10 causes liquid chromatograph 40 to analyze the sample in accordance with each of the one or more analysis conditions received from the user.

On this occasion, the second column having the column length of 50 mm is attached to liquid chromatograph 40. Liquid chromatograph 40 generates one chromatogram for one analysis condition. Liquid chromatograph 40 transmits, to processing device 10, one or more chromatograms generated in accordance with the one or more analysis conditions.

### <4. Reception of Chromatogram>

Processing device 10 receives the one or more chromatograms generated by liquid chromatograph 40.

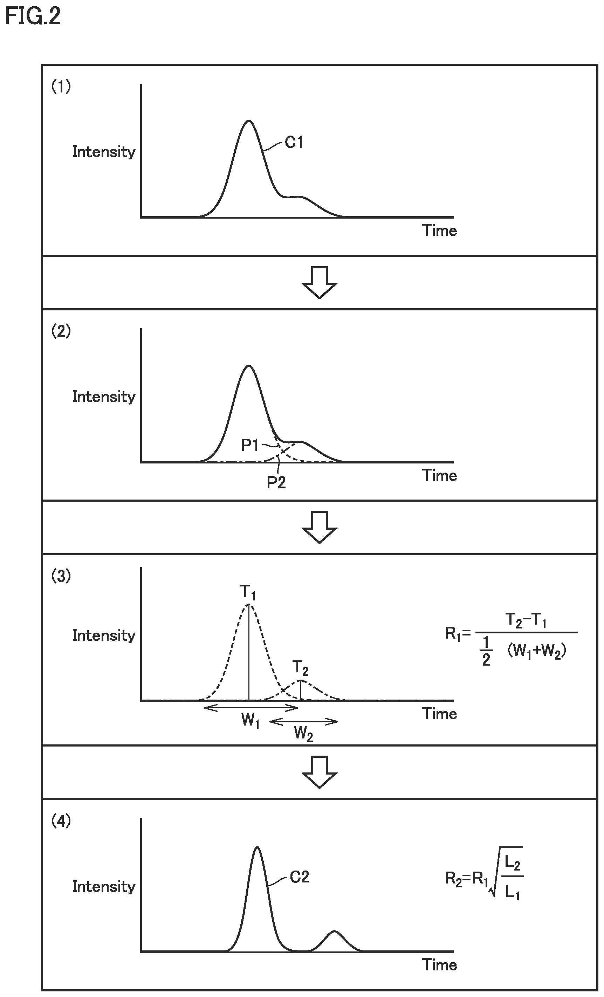

Fig. 2 is a diagram for illustrating the condition search method according to the embodiment. Referring to Fig. 2, processing to be performed onto each of the one or more chromatograms received by processing device 10 will be described. Fig. 2 shows an example of one of the one or more chromatograms received by processing device 10. A chromatogram C1 shows a temporal change in intensity of a signal detected by a detector of liquid chromatograph 40. On chromatogram C1, the retention time of component A is shorter than the retention time of component B.

### <5. Determination as to Whether or not Peaks Are Overlapped>

Processing device 10 determines whether or not peaks are overlapped with each other on each of the received one or more chromatograms. Specifically, for example, when a resolution between the peaks as calculated by peak waveform processing is lower than 1.5 and when the peaks cannot be detected by the peak waveform processing and the resolution between the peaks cannot be calculated, processing device 10 determines that the peaks are overlapped with each other.

Referring to Fig. 2, it is difficult to calculate the resolution between the peak of component A and the peak of component B on chromatogram C1 by the general peak waveform processing. Therefore, processing device 10 determines that the peak of component A and the peak of component B are overlapped with each other.

### <6. Peak Estimation Processing>

When it is determined that the peaks are overlapped with each other, processing device 10 estimates, by peak estimation processing, the peaks from which the overlapped peak is originated. For example, in Fig. 2 in which the peak of component A and the peak of component B are overlapped with each other, processing device 10 estimates the peak of component A and the peak of component B based on the overlapped peak.

An example of the peak estimation processing will be described below. It has been known that a peak shape on a chromatogram can be represented by a Gaussian function. Therefore, it is assumed that chromatogram C1 is formed by overlapping two Gaussian functions, and the two Gaussian functions are fitted to chromatogram C1. Thus, a peak P1 and a peak P2 can be estimated. Since the retention time of component A is shorter than the retention time of component B on chromatogram C1 shown in Fig. 2, peak P1 is presumed to be a peak originated from component A, and peak P2 is presumed to be a peak originated from component B.

It should be noted that in the peak estimation processing, another regression equation may be used instead of the Gaussian function. For example, an Exponential Modified Gaussian (EMG) function may be used in which a parameter in consideration of peak asymmetry is introduced into the Gaussian function.

### <7. Estimation of Overlap Resolution in Overlapped Peak>

Processing device 10 estimates an overlap resolution that is a resolution between peak P1 and peak P2 on chromatogram C1. The overlap resolution is derived by using, for example, the retention time of peak P1, the retention time of peak P2, the peak width of peak P1, and the peak width of peak P2. Referring to the formula (1), an overlap resolution R₁ is represented by the following formula (3) where the retention time of peak P1 is defined as T₁, the retention time of peak P2 is defined as T₂, the peak width of peak P1 is defined as W₁, and the peak width of peak P2 is defined as W₂.
[Math. 3] ${R}_{1} = \frac{{T}_{2} - {T}_{1}}{\frac{1}{2} \left({W}_{1}+{W}_{2}\right)}$ (3)

For each of the plurality of chromatograms received, processing device 10 determines whether or not the peaks are overlapped with each other, and derives the overlap resolution when it is determined that the peaks are overlapped with each other. It should be noted that when the peaks are not overlapped with each other, processing device 10 calculates the resolution between the peaks by the peak waveform processing.

### <8. Derivation of Estimated Resolution in Analysis Using First Column>

By using overlap resolution R₁, processing device 10 can derive an estimated resolution in the analysis using the first column. For example, referring to the formula (2), as shown in Fig. 2, an estimated resolution R₂ between the peak of component A and the peak of component B in the first column is represented by the following formula (4) where the length of the second column used to generate chromatogram C1 is defined as L₁ and the length of the first column is defined as L₂.
[Math. 4] ${R}_{2} = {R}_{1} \sqrt{\frac{{L}_{2}}{{L}_{1}}}$ (4)

Processing device 10 displays derived estimated resolution R₂ on the display device. Moreover, processing device 10 can predict a chromatogram C2 obtained when the sample is analyzed in the first column using estimated resolution R₂ and the area values of peak P1 and peak P2. Processing device 10 may display the estimated resolution and predicted chromatogram C2 on display device 30.

### <9. Comparison Between Estimated Resolution and Desired Resolution>

Processing device 10 compares the estimated resolution with the desired resolution. Here, when the estimated resolution is equal to or more than the desired resolution, the analysis condition is determined as the analysis condition for analyzing the sample including component A and component B using the first column. The user can acquire a desired chromatogram in a short time by analyzing the same sample using the determined analysis condition and the first column.

It should be noted that when processing device 10 receives chromatograms obtained under a plurality of analysis conditions and each of a plurality of estimated resolutions calculated from the chromatograms is equal to or more than the desired resolution, for example, an analysis condition under which the estimated resolution is the largest among the plurality of estimated resolutions is determined as the analysis condition for analyzing the sample including component A and component B using the first column.

Thus, according to the analysis condition search method in the present disclosure, it is possible to determine an analysis condition under which the peak of component A and the peak of component B can be separated the most from each other even when the peaks are overlapped with each other and the resolution therebetween cannot be calculated by the peak waveform processing.

It should be noted that the derivation of the estimated resolution in the first column is not limited to the use of the linear regression equation shown in the formula (4). Another linear regression equation or a nonlinear regression equation may be used to derive the estimated resolution in the first column. Moreover, in the derivation of the estimated resolution in the first column, an interval estimation may be performed.

The length of the column used to search for the analysis condition is not limited to 50 mm. Moreover, for the column used to search for the analysis condition, the functional group of the filler, the particle size, and the column inner diameter are also not limited. The column used to search for the analysis condition may be a guard column.

### [Flowchart]

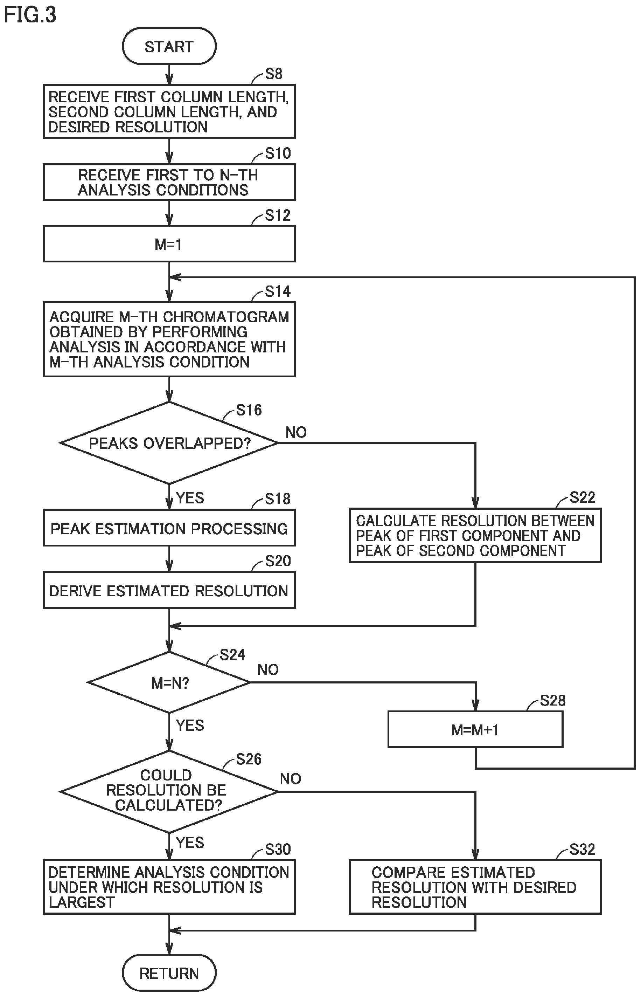

Fig. 3 is a diagram showing an exemplary flowchart of the analysis condition search processing performed by analysis system 100 to determine an analysis condition for a sample. In one implementation, an analysis condition search processing subroutine of Fig. 3 is invoked from a main routine and executed when processor 11 of processing device 10 executes analysis condition search processing program 121. It can be said that processing device 10 is an example of an information processing device. When the processing shown in Fig. 3 is performed, the second column used to search for the analysis condition is attached to liquid chromatograph 40.

In Fig. 3, the following illustratively describes that an analysis condition for a sample including a first component that is a target component to be quantified and a second component that is an enantiomer thereof is searched for.

In a step S8, processing device 10 receives the column length of the second column used to search for the analysis condition, the column length of the first column used to analyze the sample including component A and component B, and the desired resolution. The column length of the second column, the column length of the first column, and the desired resolution may be input by the user or may be determined in advance.

In a step S10, processing device 10 receives N (N is a natural number) analysis conditions from the user. For the sake of convenience, numbers 1 to N are assigned to these analysis conditions respectively.

In a step S12, processing device 10 sets, to 1, the value of a variable M used in the processing of Fig. 3.

In a step S14, processing device 10 acquires the M-th chromatogram obtained by performing the analysis using liquid chromatograph 40 in accordance with the M-th analysis condition.

In a step S16, processing device 10 determines whether or not peaks are overlapped with each other on the M-th chromatogram. Processing device 10 performs the peak waveform processing onto the M-th chromatogram, and determines that the peaks are overlapped with each other on the M-th chromatogram when resolution between the peaks is less than 1.5 or peaks between which no resolution can be calculated are present on the M-th chromatogram. When the peaks are overlapped with each other (YES in step S16), the processing proceeds to a step S18; otherwise (NO in step S16), the processing proceeds to a step S22.

In step S18, processing device 10 performs the peak estimation processing onto the overlapped peak in which the peak of the first component and the peak of the second component are overlapped with each other in the M-th chromatogram.

In a step S20, processing device 10 derives an overlap resolution on the M-th chromatogram based on the peak of the first component and the peak of the second component estimated in step S18. By using the overlap resolution, the column length of the first column, and the column length of the second column, the estimated resolution between the first component and the second component when the analysis is performed using the first column is calculated.

In step S22, processing device 10 calculates the resolution between the peak of the first component and the peak of the second component on the M-th chromatogram by using the peak separation processing.

In a step S24, processing device 10 determines whether or not the value of variable M has reached the above-described N. When the value of variable M has reached N (YES in step S24), processing device 10 proceeds the processing to a step S26; otherwise (NO in step S24), processing device 10 proceeds the processing to a step S28.

In step S26, processing device 10 determines whether or not the chromatogram on which the resolution could be calculated in step S22 is present among the obtained first to N-th chromatograms. When the chromatogram on which the resolution could be calculated is present (YES in step S26), processing device 10 proceeds the processing to a step S30; otherwise (NO in step S26), processing device 10 proceeds the processing to a step S32.

In step S28, processing device 10 counts up the value of variable M by 1, and returns the processing to step S14.

In step S30, processing device 10 determines an analysis condition under which the resolution is the largest among the N analysis conditions. Thereafter, processing device 10 ends the analysis condition search processing subroutine and returns the processing to the main routine.

In step S32, processing device 10 compares the estimated resolution calculated in step S20 with the desired resolution. Processing device 10 determines, as the analysis condition for analyzing the sample including component A and component B using the first column, the analysis condition under which the estimated resolution is equal to or more than the desired resolution. Moreover, processing device 10 may determine, as the analysis condition for analyzing the sample including component A and component B, the analysis condition under which the estimated resolution is the largest among the analysis conditions under each of which the estimated resolution is equal to or more than the desired resolution in the N analysis conditions. Thereafter, processing device 10 ends the analysis condition search processing subroutine and returns the processing to the main routine.

According to the condition search method in the present disclosure, even when the peaks of the two or more components are overlapped with each other in the analysis using the relatively short column, it is possible to estimate the peaks of the two or more components and derive the estimated resolution. By evaluating each analysis condition based on the estimated resolution, it is possible to determine the analysis condition for the analysis by the relatively long column without performing the analysis by using the relatively long column. Therefore, time required to search for the analysis condition can be reduced.

Generally, as a column used is longer, an amount of a solvent consumed in the analysis is larger. Since the condition search method according to the present disclosure uses the result of performing the analysis using the relatively short column, it is possible to reduce the amount of the solvent to be used and to reduce cost for the condition search, as compared with a case where the search is performed using the relatively long column.

The analysis condition search method according to the embodiment is used, for example, to determine an analysis condition for quantifying a component included in a predetermined sample. By using the analysis condition search method according to the embodiment, the column having the predetermined column length is used when quantifying the component included in the predetermined sample, but the analysis condition can be searched for by using the column having the column length shorter than the predetermined length. It should be noted that the predetermined sample is, for example, a sample including a target component and a component having a physicochemical property similar to that of the target component. The component having the physicochemical property similar to that of the target component is, for example, an enantiomer of the target component. Since the target component and the enantiomer thereof have such similar physicochemical properties, it is considered that the retention times are close to each other. Therefore, for example, on the chromatogram obtained by performing the analysis using the relatively short first column, the peak of the target component and the peak of the enantiomer may be overlapped with each other. According to the above-described analysis condition search method, even when the peak of the target component and the peak of the enantiomer thereof are overlapped with each other on the chromatogram obtained using the first column, the analysis condition in the analysis using the second column having the length different from that of the first column can be searched for.

It should be noted that even when the overlapped peak is formed from peaks of three or more components, the above-described analysis condition search method can be applied. Specifically, for example, it is assumed that peaks of three components D, E, and F are overlapped with one another. First, the peaks of components D, E, and F are estimated by the peak estimation processing. Then, an estimated resolution between the peaks of component D and component E, an estimated resolution between the peaks of component D and component F, and an estimated resolution between the peaks of component E and component F are derived. Then, processing device 10 compares the estimated resolution having the smallest value among the estimated resolutions with the desired resolution. When the smallest estimated resolution is equal to or more than the desired resolution, the other two estimated resolutions are also equal to or more than the desired resolution.

The chromatogram to be subjected to the analysis condition search method described above is not limited to the chromatogram generated by liquid chromatograph 40 of analysis system 100, and may be a chromatogram generated by a chromatograph outside analysis system 100.

### [Modification 1]

Analysis system 100 may end the search when there is the analysis condition under which the resolution can be calculated, or when there is the analysis condition under which the estimated resolution is equal to or more than the desired resolution.

For example, in order to select the analysis condition under which the resolution or the estimated resolution is the largest, the chromatograms obtained by performing the analyses in accordance with all the received analysis conditions are required.

Here, before performing the analyses in accordance with all the received analysis conditions, an analysis system according to a modification 1 ends the search when an analysis condition under which a resolution can be calculated is found or when an analysis condition under which an estimated resolution is equal to or more than the desired resolution is found. Therefore, according to the condition search method in modification 1, since it is not necessary to perform the analyses in accordance with all the received analysis conditions, it is possible to reduce the time required to search for the analysis condition.

### <Flowchart>

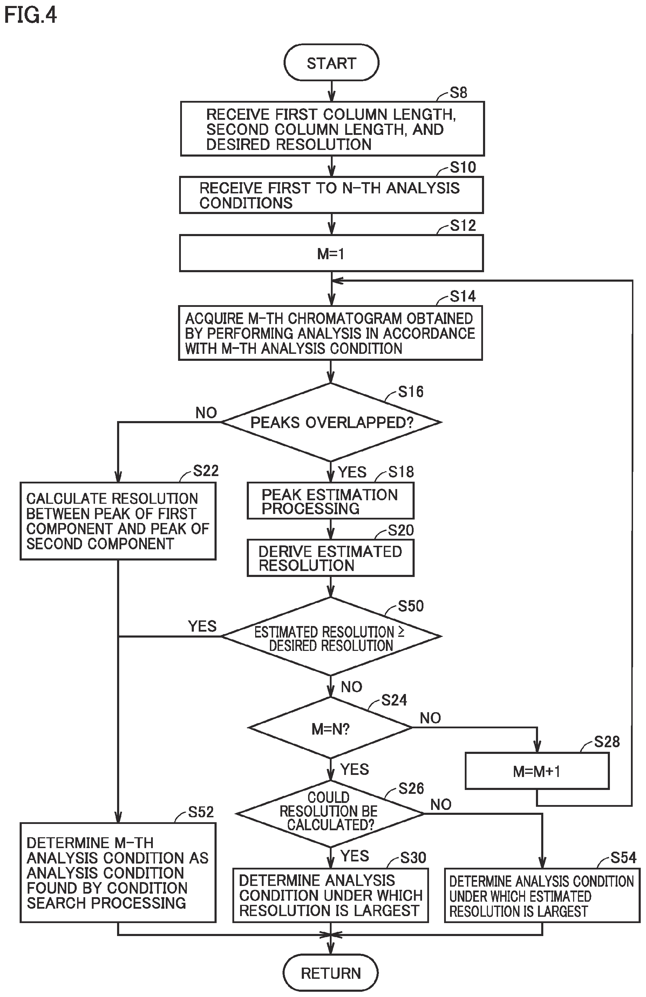

Fig. 4 is a diagram showing an exemplary flowchart of the analysis condition search processing according to modification 1. In one implementation, an analysis condition search processing subroutine of Fig. 4 is invoked from a main routine and is performed when processor 11 of processing device 10 executes analysis condition search processing program 121. It can be said that processing device 10 is an example of an information processing device. In Fig. 4, the same processing as that in the flowchart described with reference to Fig. 3 are denoted by the same reference character and will not be described.

In a step S50, processing device 10 determines whether or not the estimated resolution derived in step S20 is equal to or more than the desired resolution. When the estimated resolution is equal to or more than the desired resolution (YES in step S50), the processing proceeds to a step S52; otherwise (NO in step S50), the processing proceeds to step S24. It should be noted that determining whether or not the estimated resolution derived in step S50 is equal to or more than the desired resolution is an example of "comparing the estimated resolution with the desired resolution".

In step S52, the M-th analysis condition is determined as the analysis condition for analyzing the sample. Thereafter, processing device 10 ends the analysis condition search processing subroutine and returns the processing to the main routine.

In a step S54, processing device 10 determines, as the analysis condition for analyzing the sample, the analysis condition under which the estimated resolution is the largest. Thereafter, processing device 10 ends the analysis condition search processing subroutine and returns the processing to the main routine.

According to the analysis condition search method in modification 1, the time required to search for the analysis condition can be reduced as compared with the analysis condition search method in the embodiment.

It should be noted that analysis system 100 may receive one analysis condition and may determine whether the one analysis condition corresponds to the analysis condition under which the resolution can be calculated or the analysis condition under which the estimated resolution is equal to or more than the desired resolution. When the one analysis condition is the analysis condition under which the resolution can be calculated or the analysis condition under which the estimated resolution is equal to or more than the desired resolution, the one analysis condition is determined as the analysis condition for analyzing the sample. When the one analysis condition is not the analysis condition under which the resolution can be calculated or the analysis condition under which the estimated resolution is equal to or more than the desired resolution, analysis system 100 generates an analysis condition different from the one analysis condition and determines whether the analysis condition corresponds to the analysis condition under which the resolution can be calculated or the analysis condition under which the estimated resolution is equal to or more than the desired resolution. When the analysis condition for analyzing the sample is determined, analysis system 100 ends the analysis condition search processing. In this way, it may be determined whether the received analysis condition corresponds to the analysis condition under which the resolution can be calculated or the analysis condition under which the estimated resolution is equal to or more than the desired resolution, and a different analysis condition may be determined in accordance with the determination result. The one analysis condition may be determined in advance or may be input by the user.

### [Modification 2]

In the analysis condition search method according to each of the above-described embodiment and modification 1, the order in which the analyses are performed in accordance with the plurality of received analysis conditions is not particularly determined. In an analysis condition search method according to a modification 2, an analysis condition for the K+2-th analysis is determined based on an estimated resolution obtained in the K-th analysis and an estimated resolution obtained in the K+1-th analysis.

Specifically, for example, it is assumed that there are an analysis condition J and an analysis condition P, which are different from each other only in one of the parameters included in the analysis conditions. First, liquid chromatograph 40 performs an analysis in accordance with analysis condition J, and then performs an analysis in accordance with analysis condition P. Here, when an estimated resolution obtained in accordance with analysis condition P is larger than an estimated resolution obtained in accordance with analysis condition J, an analysis condition Q under which the next analysis is to be performed is determined in accordance with a type of the parameter.

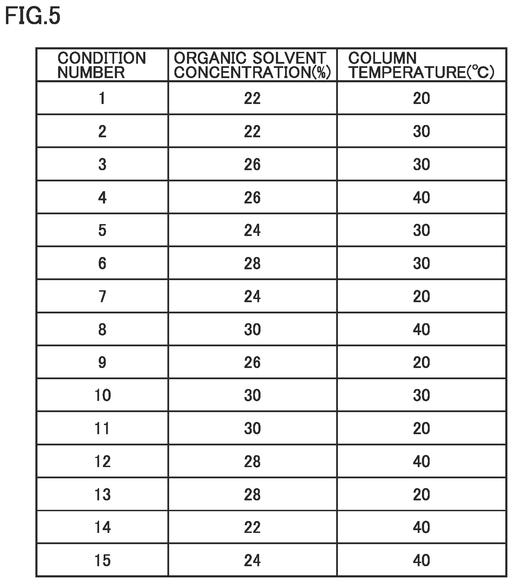

The analysis condition search method according to modification 2 will be specifically described with reference to figures. Fig. 5 shows exemplary analysis conditions. First, an analysis is performed by liquid chromatograph 40 in accordance with an analysis condition having a condition number "1", so as to derive an estimated resolution U. Then, an analysis is performed by liquid chromatograph 40 in accordance with an analysis condition having a condition number "2", so as to derive an estimated resolution V. Analysis condition J and analysis condition P are different from each other only in the value of the parameter "temperature of the column oven" of the parameters "organic solvent concentration" and "temperature of the column oven" included in the analysis conditions. Specifically, the "temperature of the column oven" in analysis condition J is larger than the "temperature of the column oven" in analysis condition P. The "temperature of the column oven" is an example of a parameter that can be represented by a numerical value.

Here, when estimated resolution U < estimated resolution V, it is expected that the estimated resolution becomes large by further increasing the temperature of the column oven. Therefore, processing device 10 performs an analysis in accordance with an analysis condition having a condition number "14" prior to the other analysis conditions. If an estimated resolution W obtained by performing the analysis in accordance with the analysis condition having the condition number "14" is equal to or more than the desired resolution, the search for analysis condition is ended.

It should be noted that the temperature of the column oven is an example of the type of the parameter that can be represented by a numerical value. In addition to the temperature of the column oven, parameters that can be represented by numerical values are a flow rate, types of two or more solvents, pHs of the two or more solvents, organic solvent ratios of the two or more solvents, a gradient condition, a type of a solvent, a pH of the solvent, and an organic solvent ratio of the solvent.

Further, in the above-described example, it has been illustratively described that the estimated resolution is larger as the value of the "temperature of the column oven" is larger; however, when the estimated resolution is larger as the value of the parameter is smaller, an analysis condition under which the value of the parameter is smaller is analyzed prior to the other analysis conditions.

The parameters include not only the parameter that can be represented by a numerical value but also a parameter that cannot be represented by a numerical value. The parameter that cannot be represented by a numerical value is, for example, an analysis mode. The analysis mode includes the gradient mode and the isocratic mode. In the example described above, in the case where the analysis mode of the parameters is different between analysis condition J and analysis condition P, when estimated resolution U < estimated resolution V, the analysis mode of analysis condition Q is set to be the same analysis mode as the analysis mode of analysis condition P.

According to the analysis condition search method in modification 2, the analysis in accordance with the analysis condition such that the estimated resolution becomes large is performed prior to the other analyses. Therefore, it is possible to reduce the time required to find the analysis condition under which the estimated resolution is equal to or more than the desired resolution.

### [Modification 3]

In the condition search method according to each of the above-described embodiment, modification 1, and modification 2, the estimated resolution is derived based on the overlapped peak. However, in some cases, it is difficult to estimate, by the above-described peak estimation processing, the peaks of the two or more components that form the overlapped peak. In such a case, the outer shape of the overlapped peak is substantially the shape of a single peak.

When the respective retention times of the components that form the overlapped peak are deviated, the width of the overlapped peak becomes large. Therefore, when it is difficult to estimate the peaks of the components that form the overlapped peak by the peak estimation processing, processing device 10 calculates the width of the overlapped peak. Then, processing device 10 selects an analysis condition under which the width of the overlapped peak is the largest among the received analysis conditions.

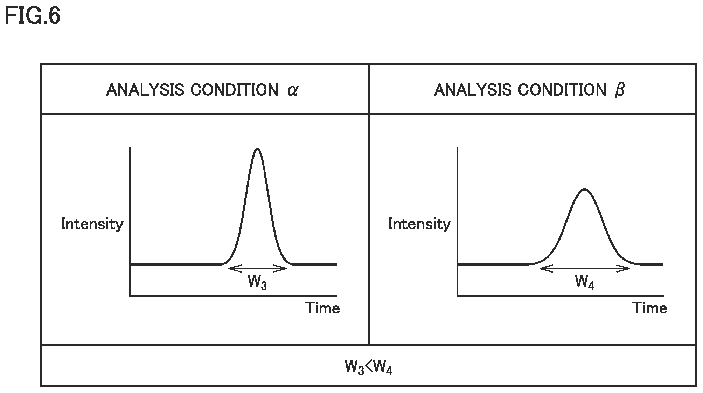

Fig. 6 is a diagram for illustrating a width of an overlapped peak. Fig. 6 shows chromatograms obtained by analyzing a sample including a component a and a component b in accordance with an analysis condition α and an analysis condition β. On each of the chromatogram obtained by the analysis in accordance with analysis condition α and the chromatogram obtained by the analysis in accordance with analysis condition β, the peaks of component a and component b are overlapped with each other, and the peak of component a and the peak of component b cannot be estimated by the peak estimation processing.

The width of the overlapped peak on the chromatogram obtained by performing the analysis in accordance with analysis condition α is defined as W₃, and the width of the overlapped peak on the chromatogram obtained by performing the analysis in accordance with analysis condition β is defined as W₄. When W₃<W₄, the processing device determines that component a and component b could be separated more from each other in accordance with analysis condition α than those in accordance with analysis condition β. In this way, when no estimated resolutions can be derived in accordance with all the received analysis conditions, the analysis condition under which the width of the overlapped peak is the largest is determined.

According to the analysis condition search method in modification 3, even when no estimated resolution can be derived by the peak estimation processing and the processing of estimating the overlap resolution in the overlapped peak, it is possible to search for an analysis condition under which a target component can be separated with the highest possibility.

### [Implementations]

It will be understood by those skilled in the art that the exemplary embodiments described above are specific examples of the following implementations.

(Item 1) An analysis condition search method according to one implementation is a method of searching for an analysis condition for acquiring a chromatogram with a desired resolution by analyzing a sample using a first column, the sample including a first component and a second component different from each other, and may include: acquiring a first chromatogram by analyzing the sample under an analysis condition under which a second column is used the second column being shorter than the first column; estimating, from the first chromatogram, an estimated resolution between peaks of the first component and the second component when the second column is changed to the first column; and comparing the estimated resolution with the desired resolution.

In the method according to item 1, it is possible to reduce a time required to search for the analysis condition. Further, cost required to search for the analysis condition can be reduced.

(Item 2) In the method according to item 1, the calculating may include determining a first retention time and a first peak width of a peak of the first component and a second retention time and a second peak width of a peak of the second component on the first chromatogram.

In the method according to item 2, the estimated resolution between the peaks of the first component and the second component when the second column is changed to the first column can be calculated using the retention time and peak width of the peak of the first component and the retention time and peak width of the peak of the second component on the first chromatogram.

(Item 3) In the method according to item 2, the determining may include estimating the peak of the first component and the peak of the second component using a Gaussian function or an Exponential Modified Gaussian function.

In the method according to item 3, the peaks of the plurality of components that form the overlapped peak can be estimated using the Gaussian function or the Exponential Modified Gaussian function.

(Item 4) In the method according to any one of items 1 to 3, the analysis condition may include at least one of an elution method, a flow rate, and a temperature of a column oven.

In the method according to item 4, the analysis condition includes at least one of the elution method, the flow rate, and the temperature of the column oven.

(Item 5) In the method according to any one of items 1 to 4, the first chromatogram may be generated by a liquid chromatograph.

In the method according to item 5, it is possible to reduce the time required to search for the analysis condition in the liquid chromatograph.

(Item 6) In the method according to any one of items 1 to 5, the first component may be an enantiomer of the second component.

In the method according to item 6, it is possible to reduce the time required to search for the analysis condition for the sample including the target component and the enantiomer thereof.

(Item 7) In the method according to any one of items 1 to 6, the first column may be a guard column.

In the method according to item 7, the analysis condition can be searched for by using the guard column.

(Item 8) The method according to any one of items 1 to 7 may further include displaying the estimated resolution on a display device.

In the method according to item 8, the estimated resolution between the peaks of the first component and the second component when the second column is changed to the first column is displayed. Therefore, the user can readily recognize the estimated resolution.

(Item 9) An analysis system according to one implementation is an analysis system for searching for an analysis condition for acquiring a chromatogram with a desired resolution by analyzing a sample using a first column, the sample including a first component and a second component different from each other, and may include: a chromatograph; and a controller that controls an operation of the chromatograph, wherein the controller may be configured to acquire a first chromatogram obtained by analyzing the sample using the chromatograph under an analysis condition under which a second column shorter than the first column is used, estimate, from the first chromatogram, an estimated resolution between peaks of the first component and the second component when the second column is changed to the first column, and compare the estimated resolution with the desired resolution.

In the analysis system according to item 9, it is possible to reduce the time required to search for the analysis condition. Further, cost required to search for the analysis condition can be reduced.

(Item 10) An analysis condition search method according to an implementation is a method for searching for an analysis condition for acquiring a chromatogram with a desired resolution by analyzing a sample using a first column, the sample including a first component and a second component different from each other, and may include: acquiring one or more chromatograms obtained by analyzing the sample using a second column shorter than the first column and in accordance with one or more analysis conditions; estimating an estimated resolution between peaks of the first component and the second component on each of the one or more chromatograms when the second column is changed to the first column; and comparing the estimated resolution with the desired resolution.

In the method according to item 10, it is possible to reduce the time required to search for the analysis condition. Further, cost required to search for the analysis condition can be reduced.

(Item 11) In the method according to item 10, the one or more analysis conditions may include a first analysis condition, the calculating may include deriving a first estimated resolution obtained by analyzing the sample under the first analysis condition, and the comparing may include selecting the first analysis condition when the first estimated resolution is more than or equal to the desired resolution.

In the method according to item 11, it is possible to search for the analysis condition under which the estimated resolution between the peaks of the first component and the second component when the second column is changed to the first column is equal to or more than the desired resolution.

(Item 12) In the method according to item 10 or 11, the one or more analysis conditions may include a second analysis condition and a third analysis condition, the calculating may include deriving a second estimated resolution obtained by analyzing the sample under the second analysis condition, and deriving a third estimated resolution obtained by analyzing the sample under the third analysis condition, and the comparing may include selecting the third analysis condition when the third estimated resolution is more than the second estimated resolution.

In the method according to item 12, it is possible to search for the analysis condition, of the two different analysis conditions, under which the estimated resolution between the peaks of the first component and the second component when the second column is changed to the first column becomes large.

(Item 13) In the method according to any one of items 10 to 12, the one or more analysis conditions may include a fourth analysis condition, the calculating may include deriving a fourth estimated resolution obtained by analyzing the sample under the fourth analysis condition, the method may further include: deriving a fifth estimated resolution obtained by analyzing the sample under a fifth analysis condition different from the fourth analysis condition when the fourth estimated resolution is smaller than the desired resolution in the comparing.

In the method according to item 13, when the fourth estimated resolution is smaller than the desired resolution, the fifth estimated resolution in the fifth analysis condition different from the fourth analysis condition is derived. Thus, for example, when the fourth estimated resolution is equal to or more than the desired resolution, the analysis in accordance with the fifth analysis condition does not need to be performed, thereby reducing the time required to search for the analysis condition.

(Item 14) The method according to any one of items 10 to 13 may further include: calculating a width of a peak in which the peak of the first component and the peak of the second component are overlapped with each other on each of the one or more chromatograms; and selecting, from the one or more analysis conditions, an analysis condition under which the width is the largest.

In the method according to item 14, it is possible to search for the analysis condition under which the components in the sample can be separated from each other even when the estimated resolution cannot be derived.

(Item 15) A computer-readable medium according to one implementation is a non-transitory computer-readable medium in which a program is recorded, wherein when executed by one or more processors of a computer, the program may cause the computer to perform the method according to any one of items 1 to 8 and items 10 to 14.

In the computer-readable medium according to item 15, it is possible to reduce the time required to search for the analysis condition. Further, cost required to search for the analysis condition can be reduced.

(Item 16) An analysis condition search system according to one implementation is an analysis system for searching for an analysis condition for acquiring a chromatogram with a desired resolution by analyzing a sample using a first column, the sample including a first component and a second component different from each other, and may include: a chromatograph; and a controller that controls an operation of the chromatograph, wherein the controller may be configured to acquire one or more chromatograms obtained by analyzing, by the chromatograph, the sample using a second column shorter than the first column and in accordance with one or more analysis conditions, estimate an estimated resolution between peaks of the first component and the second component on each of the one or more chromatograms when the second column is changed to the first column, and compare the estimated resolution with the desired resolution.

In the analysis system according to item 16, it is possible to reduce the time required to search for the analysis condition. Further, cost required to search for the analysis condition can be reduced.

(Item 17) In the analysis system according to item 16, each of the one or more analysis conditions may include a plurality of parameters, a first parameter of the plurality of parameters of a first analysis condition included in the one or more analysis conditions may be different from a first parameter of the plurality of parameters of a second analysis condition included in the one or more analysis conditions, wherein the controller is configured to cause the chromatograph to perform an analysis that is in accordance with the first analysis condition and subsequently perform an analysis that is in accordance with the second analysis condition, determine, in accordance with a type of the first parameter, a third analysis condition under which the chromatograph performs an analysis subsequently to the analysis that is in accordance with the second analysis condition when a first estimated resolution obtained by analyzing the sample under the first analysis condition is smaller than a second estimated resolution obtained by analyzing the sample under the second analysis condition.

In the analysis system according to item 17, the analysis in accordance with the analysis condition under which the estimated resolution is expected to be larger is performed prior to the other analyses. Therefore, it is possible to reduce time required to search for the analysis condition under which the resolution is equal to or more than the desired resolution.

(Item 18) In the analysis system according to item 17, when the type of the first parameter is representable by a numerical value and a value of the first parameter of the second analysis condition is larger than a value of the first parameter of the first analysis condition, the controller may be configured to set the value of the first parameter of the third analysis condition to be larger than the value of the first parameter of the second analysis condition.

In the analysis system according to item 18, the analysis in accordance with the analysis condition under which the parameter has such a value that the estimated resolution is expected to become larger is performed prior to the other analyses. Therefore, it is possible to reduce time required to search for the analysis condition under which the resolution is equal to or more than the desired resolution.

(Item 19) In the analysis system according to item 17, when the type of the first parameter is representable by a numerical value and the value of the first parameter of the second analysis condition is smaller than the value of the first parameter of the first analysis condition, the controller may be configured to set the value of the first parameter of the third analysis condition to be smaller than the value of the first parameter of the second analysis condition.

In the analysis system according to item 19, the analysis in accordance with the analysis condition under which the parameter has such a value that the estimated resolution is expected to become larger is performed prior to the other analyses. Therefore, it is possible to reduce time required to search for the analysis condition under which the resolution is equal to or more than the desired resolution.

(Item 20) In the analysis system according to item 17, when the type of the first parameter is an analysis mode, the controller may be configured to set the first parameter of the third analysis condition to be the same as an analysis mode of the first parameter of the second analysis condition.

In the analysis system according to item 20, the analysis in accordance with the analysis mode in which the estimated resolution is expected to be larger is performed prior to the other analyses. Therefore, it is possible to reduce time required to search for the analysis condition under which the resolution is equal to or more than the desired resolution.

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. A method of searching for an analysis condition for acquiring a chromatogram with a desired resolution by analyzing a sample using a first column, the sample including a first component and a second component different from each other, the method comprising:
acquiring a first chromatogram by analyzing the sample under an analysis condition under which a second column is used, the second column being shorter than the first column;
estimating, from the first chromatogram, an estimated resolution between peaks of the first component and the second component when the second column is changed to the first column; and
comparing the estimated resolution with the desired resolution.

2. The method according to claim 1, wherein the calculating includes determining a first retention time and a first peak width of a peak of the first component, and a second retention time and a second peak width of a peak of the second component on the first chromatogram.

3. The method according to claim 2, wherein the determining includes estimating the peak of the first component and the peak of the second component using a Gaussian function or an Exponential Modified Gaussian function.

4. The method according to any one of claims 1 to 3, wherein the analysis condition includes at least one of an elution method, a flow rate, and a temperature of a column oven.

5. The method according to any one of claims 1 to 4, wherein the first chromatogram is generated by a liquid chromatograph.

6. The method according to any one of claims 1 to 5, wherein the first component is an enantiomer of the second component.

7. The method according to any one of claim 1 to 6, wherein the first column is a guard column.

8. The method according to any one of claim 1 to 7, further comprising displaying the estimated resolution on a display device (30).

9. An analysis system (100) for searching for an analysis condition for acquiring a chromatogram with a desired resolution by analyzing a sample using a first column, the sample including a first component and a second component different from each other, the analysis system comprising:
a chromatograph (40); and
a controller (10) that controls an operation of the chromatograph (40), wherein
the controller (10) is configured to
acquire a first chromatogram obtained by analyzing the sample using the chromatograph (40) under an analysis condition under which a second column shorter than the first column is used,
estimate, from the first chromatogram, an estimated resolution between peaks of the first component and the second component when the second column is changed to the first column, and
compare the estimated resolution with the desired resolution.

10. A method of searching for an analysis condition for acquiring a chromatogram with a desired resolution by analyzing a sample using a first column, the sample including a first component and a second component different from each other, the method comprising:
acquiring one or more chromatograms obtained by analyzing the sample using a second column shorter than the first column and in accordance with one or more analysis conditions;
estimating an estimated resolution between peaks of the first component and the second component on each of the one or more chromatograms when the second column is changed to the first column; and
comparing the estimated resolution with the desired resolution.

11. The method according to claim 10, wherein
the one or more analysis conditions include a first analysis condition,
the calculating includes deriving a first estimated resolution obtained by analyzing the sample under the first analysis condition, and
the comparing includes selecting the first analysis condition when the first estimated resolution is more than or equal to the desired resolution.

12. The method according to claim 10 or 11, wherein
the one or more analysis conditions include a second analysis condition and a third analysis condition,
the calculating includes
deriving a second estimated resolution obtained by analyzing the sample under the second analysis condition, and
deriving a third estimated resolution obtained by analyzing the sample under the third analysis condition, and
the comparing includes selecting the third analysis condition when the third estimated resolution is more than the second estimated resolution.

13. The method according to any one of claims 10 to 12, wherein
the one or more analysis conditions include a fourth analysis condition,
the calculating includes
deriving a fourth estimated resolution obtained by analyzing the sample under the fourth analysis condition,
the method further comprising:
deriving a fifth estimated resolution obtained by analyzing the sample under a fifth analysis condition different from the fourth analysis condition when the fourth estimated resolution is smaller than the desired resolution in the comparing.

14. The method according to any one of claims 10 to 13, further comprising:
calculating a width of a peak in which the peak of the first component and the peak of the second component are overlapped with each other on each of the one or more chromatograms; and
selecting, from the one or more analysis conditions, an analysis condition under which the width is the largest.

15. A program having an instruction that, when executed by one or more processors of a computer, causes the computer to perform the method according to any one of claims 1 to 8 and 10 to 14.
